# EUROPEAN PATENT APPLICATION

(11) **EP 4 537 685 A1**
(43) Date of publication of application: **16.04.2025**
(21) Application number: 23864615.2
(22) Date of filing: 06.09.2023
(51) Int. Cl.: A24F 40/46, A24F 40/40, A24F 40/20, A24F 40/42, A24D 1/20

(54) **ELECTRONIC ATOMIZATION DEVICE AND CONTROL METHOD THEREFOR**

(30) Priority: 16.09.2022 CN 202211129817
(71) Applicant: Shenzhen First Union Technology Co., Ltd., Shenzhen, Guangdong 518000 (CN)
(72) Inventor: HUANG, Linjian, Shenzhen, Guangdong 518000 (CN); XU, Zhongli, Shenzhen, Guangdong 518000 (CN); LI, Yonghai, Shenzhen, Guangdong 518000 (CN); LIANG, Kunxin, Shenzhen, Guangdong 518000 (CN); FANG, Xiaogang, Shenzhen, Guangdong 518000 (CN)
(74) Representative: Ran, Handong
(86) International application number: PCT/CN2023/117259
(87) International publication number: WO 2024/055883

(57) **Abstract**

An electronic atomization device (100) and a control method therefor. The electronic atomization device (100) comprises a power supply assembly (20) and an atomizer (10). The atomizer (10) comprises a susceptor (11). The power supply assembly (20) comprises: a battery cell (23); an inverter comprising at least one resonator, the inverter being configured to generate a varying magnetic field; and a controller configured to control the battery cell (23) to provide a pulse voltage to the inverter so as to detect whether the atomizer (10) is connected to the power supply assembly (20), and further configured to adjust the resonant frequency of the inverter and/or the voltage value of the pulse voltage when detecting whether the atomizer (10) is connected to the power supply assembly (20), so that the resonant voltage of the inverter is lower than a withstand voltage of the at least one resonator.

## Description

### CROSS-REFERENCE TO RELATED APPLICATIONS

This application claims priority to Chinese Patent Application No. 202211129817.X, filed with the China National Intellectual Property Administration on September 16, 2022 and entitled "ELECTRONIC ATOMIZATION DEVICE AND CONTROL METHOD THEREFOR", which is incorporated herein by reference in its entirety.

### TECHNICAL FIELD

This application relates to the field of electronic atomization technologies, and in particular, to an electronic atomization device and a control method therefor.

### BACKGROUND

The electronic atomization device which is used as an example includes an atomizer and a power supply assembly that are detachably connected. The atomizer is internally provided with a liquid storage cavity for storing a liquid substrate, an atomizing assembly, and the like, and the power supply assembly is internally provided with a battery cell, a circuit, and the like. Generally, a connection status between the atomizer and the power supply assembly needs to be detected, that is, whether the atomizer is connected to the power supply assembly is detected. The atomizing assembly may be enabled to operate only after the atomizer is connected to the power supply assembly, to heat the liquid substrate to generate an aerosol for inhalation.

When it is detected whether the atomizer is connected to the power supply assembly, a resonance voltage of a resonant circuit is excessively large, which is easy to damage a resonant component.

### SUMMARY

This application aims to provide an electronic atomization device and a control method therefor, to avoid a problem that when it is detected whether an atomizer is connected to a power supply assembly, a resonance voltage of a resonant circuit is excessively large, which is easy to damage a resonant component.

One aspect of this application provides an electronic atomization device, including a power supply assembly, and an atomizer removable connected to the power supply assembly;
the atomizer including a susceptor, the susceptor being configured to be penetrated by a varying magnetic field to generate heat, to heat a liquid substrate to generate an aerosol;
the power supply assembly including:
   a battery cell, configured to supply power;
   an inverter, including at least one resonant component, the inverter being configured to generate a varying magnetic field; and
   a controller, configured to control the battery cell to provide a pulse voltage for the inverter, to detect whether the atomizer is connected to the power supply assembly; and further configured to adjust a resonance frequency of the inverter and/or a voltage value of the pulse voltage when detecting whether the atomizer is connected to the power supply assembly, so that a resonance voltage of the inverter is lower than a voltage resistance value of the at least one resonant component.

Another aspect of this application provides an electronic atomization device, including a power supply assembly, and an atomizer removable connected to the power supply assembly;
the atomizer including a susceptor, the susceptor being configured to be able to be penetrated by a varying magnetic field to generate heat, to heat a liquid substrate to generate an aerosol;
the power supply assembly including:
   a battery cell, configured to supply power;
   an inverter, the inverter being configured to generate a varying magnetic field; and
   a controller, configured to control the battery cell to provide a first pulse voltage for the inverter, so that the inverter operates at a first resonance frequency, and the susceptor generates heat; and
   configured to control the battery cell to periodically provide a second pulse voltage for the inverter at an interval, so that the inverter operates at a second resonance frequency lower than the first resonance frequency, to detect whether the atomizer is connected to the power supply assembly.

Another aspect of this application provides a control method for an electronic atomization device, where the electronic atomization device includes a power supply assembly, and an atomizer removable connected to the power supply assembly;
the atomizer includes a susceptor, the susceptor is configured to be penetrated by a varying magnetic field to generate heat, to heat a liquid substrate to generate an aerosol;
the power supply assembly includes:
   a battery cell, configured to supply power; and
   an inverter, including at least one resonant component, the inverter being configured to generate a varying magnetic field; and
   the method includes:
      controlling the battery cell to provide a pulse voltage for the inverter, to detect whether the atomizer is connected to the power supply assembly; and
      adjusting a resonance frequency of the inverter and/or a voltage value of the pulse voltage when detecting whether the atomizer is connected to the power supply assembly, so that a resonance voltage of the inverter is lower than a voltage resistance value of the at least one resonant component.

According to the electronic atomization device and the control method therefor, the resonance frequency of the inverter and/or the voltage value of the pulse voltage are/is adjusted when it is detected whether the atomizer is connected to the power supply assembly, so that the resonance voltage of the inverter is lower than the voltage resistance value of the at least one resonant component, to avoid damaging the resonant component.

### BRIEF DESCRIPTION OF THE DRAWINGS

One or more embodiments are exemplarily described with reference to the corresponding figures in the accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.
FIG. 1 is a schematic diagram of an electronic atomization device according to an implementation of this application;
FIG. 2 is a schematic diagram of a switch circuit and a resonant circuit according to an implementation of this application;
FIG. 3 is a schematic diagram of a sampling circuit and a comparator circuit according to an implementation of this application; and
FIG. 4 is a schematic diagram of a control method for an electronic atomization device according to an implementation of this application.

### DETAILED DESCRIPTION

For ease of understanding of this application, this application is described below in more detail with reference to accompanying drawings and specific implementations. It should be noted that, when an element is expressed as "being fixed to" another element, the element may be directly on the another element, or one or more intermediate elements may exist between the element and the another element. When one element is expressed as "being connected to" another element, the element may be directly connected to the another element, or one or more intermediate elements may exist between the element and the another element. The terms "upper", "lower", "left", "right", "inner", "outer", and similar expressions used in this specification are only used for an illustrative purpose.

Unless otherwise defined, meanings of all technical and scientific terms used in this specification are the same as those usually understood by a person skilled in the art to which this application belongs. The terms used in this specification of this application are merely intended to describe objectives of the specific implementations, and are not intended to limit this application. A term "and/or" used in this specification includes any or all combinations of one or more related listed items.

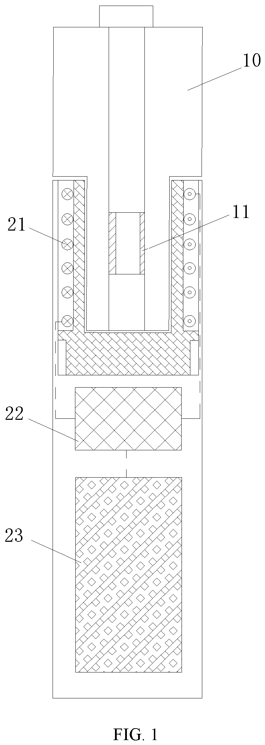

FIG. 1 is a schematic diagram of an electronic atomization device according to an implementation of this application.

As shown in FIG. 1, an electronic atomization device 100 includes an atomizer 10 and a power supply assembly 20. The atomizer 10 is removable connected to the power supply assembly 20. The atomizer 10 may be in snap-fit connection, magnetic connection, and the like to the power supply assembly 20.

The atomizer 10 includes a susceptor 11 and a liquid storage cavity (not shown). The liquid storage cavity is configured to store an atomizable liquid substrate; and the susceptor 11 is configured to be inductively coupled to an inductor 21, and be penetrated by a varying magnetic field to generate heat, thereby heating the liquid substrate to generate an aerosol for inhalation.

The liquid substrate preferably includes a tobacco-containing material. The tobacco-containing material includes a volatile tobacco aroma compound released from the liquid substrate when being heated. Alternatively or additionally, the liquid substrate may include a non-tobacco material. The liquid substrate may include water, ethanol or another solvent, a plant extract, a nicotine solution, and natural or artificial flavoring agents. Preferably, the liquid substrate further includes an aerosol-forming agent. Examples of a suitable aerosol-forming agent are glycerol and propylene glycol.

Generally, the susceptor 11 may be made of at least one of the following materials: aluminum, iron, nickel, copper, bronze, cobalt, ordinary carbon steel, stainless steel, ferritic stainless steel, martensitic stainless steel, or austenitic stainless steel.

Further, the atomizer 10 further includes a liquid transfer unit. The liquid transfer unit may be made of, for example, cotton fiber, metal fiber, ceramic fiber, glass fiber, porous ceramic, or the like. The liquid substrate stored in the liquid storage cavity may be transferred to the susceptor 11 through a capillary action.

The power supply assembly 20 includes an inductor 21, a circuit 22, and a battery cell 23.

The inductor 21 generates a varying magnetic field under an alternating current. The inductor 21 includes, but is not limited to, an induction coil.

The battery cell 23 provides electric power for operating the electronic atomization device 100. The battery cell 23 may be a rechargeable battery cell or a disposable battery cell.

The circuit 22 may control overall operations of the electronic atomization device 100. The circuit 22 not only controls operations of the battery cell 23 and the inductor 21, but also controls an operation of another element in the electronic atomization device 100.

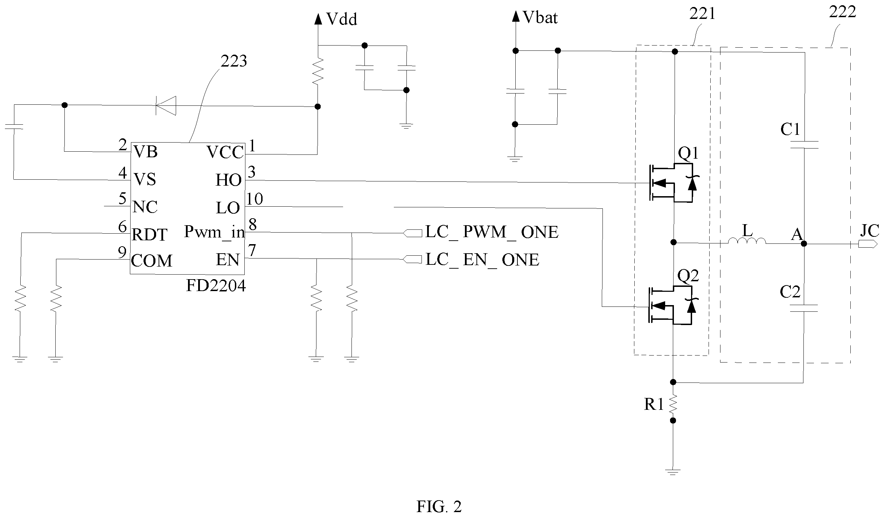

FIG. 2 is a schematic diagram of a basic assembly according to an embodiment of a circuit 22; and the circuit 22 includes:
an inverter, including a switch circuit 221 and a resonant circuit 222.

The switch circuit 221 is a half-bridge circuit including a transistor. The transistor includes, but is not limited to, an IGBT, a MOS tube, and the like. As shown in the figure, the half-bridge circuit includes a switch tube Q1 and a switch tube Q2, configured to enable the resonant circuit 222 to generate resonance through alternate on-off switching.

The resonant circuit 222 includes an inductor 21 (shown as L in the figure), a first capacitor C1, and a second capacitor C2; and the resonant circuit 222 is configured to form, during resonance, an alternating current flowing through the inductor L, so that the inductor L generates an alternating magnetic field to induce the susceptor 11 to generate heat.

A driver 223 is configured to control, based on a control signal of a controller (not shown in the figure), the switch tube Q1 and the switch tube Q2 of the switch circuit 221 to be alternately turned on and turned off. The controller may also be a part of the circuit 22, and preferably, an MCU is used.

In an example, the driver 223 is a commonly used switch tube driver of model FD2204, and is controlled by the controller in a PWM manner. Based on a pulse width of the PWM, a high level/low level is alternately sent from the third and the tenth I/O port respectively, to drive an on-time of the switch tube Q1 and the switch tube Q2, to control the resonant circuit 222 to generate resonance.

In connection, the switch tube Q1 and the switch tube Q2 are connected in series to form a first branch, and the first capacitor C1 and the second capacitor C2 are connected in series to form a second branch; and one end of the inductor L is electrically connected between the switch tube Q1 and the switch tube Q2, and the other end of the inductor L is electrically connected between the first capacitor C1 and the second capacitor C2.

Specifically, a first end of the first capacitor C1 is connected to a positive electrode of the battery cell 23, and a second end is connected to a first end of the second capacitor C2; a second end of the second capacitor C2 is connected to ground through a resistance R1; a first end of the switch tube Q1 is connected to the positive electrode of the battery cell 23, a second end is connected to a first end of the switch tube Q2, and a second end of the switch tube Q2 is connected to ground through the resistance R1; certainly, control ends of the switch tube Q1 and the switch tube Q2 are both connected to the driver 223, to be turned on and turned off under driving of the driver 223; and a first end of the inductor L is connected to the second end of the switch tube Q1, and a second end of the inductor L is connected to the second end of the first capacitor C1.

In terms of hardware selection of a resonant component, voltage resistance values of the first capacitor C1, the second capacitor C2, the switch tube Q1, and the switch tube Q2 are far greater than an output voltage value of the battery cell 23. For example, in a common implementation, a used output voltage of the battery cell 23 is basically about 4 V, while the voltage resistance values of the first capacitor C1, the second capacitor C2, the switch tube Q1, and the switch tube Q2 are within 100 V.

For the resonant circuit 222 in the foregoing structure, in a switching state of the switch tube Q1 and the switch tube Q2, a connection status among the first capacitor C1, the second capacitor C2, and the inductor L is varying. When the switch tube Q1 is turned on, and the switch tube Q2 is turned off, the first capacitor C1 and the inductor L jointly form a closed LC series loop, while the second capacitor C2 and the inductor L form an LC series loop with two ends respectively connected to positive and negative electrodes of the battery cell 23; and when the switch tube Q1 is turned off, and the switch tube Q2 is turned on, a loop formed is opposite to the foregoing state. The first capacitor C1 and the inductor L form an LC series loop with two ends respectively connected to positive and negative electrodes of the battery cell 23, while the second capacitor C2 and the inductor L jointly form a closed LC series loop. In different states, both the first capacitor C1 and the second capacitor C2 can form respective LC series loops with the inductor L. However, during an oscillation process of the respective LC series loops, directions and cycles of generated currents that flow through the inductor L are the same, to jointly form an alternating current that flows through the inductor L.

When the controller drives, by using the driver 223, the switch tube Q1 and the switch tube Q2 to be alternately turned on and turned off, the inductor L, the first capacitor C1, and the second capacitor C2 operate in a resonance state, and a central resonance point A generates sine oscillation with a voltage amplitude of Q times Vin, where Q is a quality factor of the inductor L, the first capacitor C1, and the second capacitor C2, and Vin is an input voltage or a supply voltage of the switch circuit 221. With a constant Vin, a larger Q value indicates a higher amplitude of a resonance voltage at the point A, a larger magnetic induction intensity β coupled to the susceptor 11, a higher induction electromotive force received by the susceptor 11, and a faster heating speed. A resonance frequency may improve a quality factor of a resonant loop. With a constant Vin, a higher resonance frequency indicates a larger Q value. However, a high frequency has a high requirement on a response speed of a component, and it is difficult to control costs.

In an example, the controller is configured to control the battery cell 23 to provide a pulse voltage for the inverter, to detect whether the atomizer 10 is connected to the power supply assembly 20; and further configured to adjust a resonance frequency of the inverter and/or a voltage value of the pulse voltage when detecting whether the atomizer 10 is connected to the power supply assembly 20, so that a resonance voltage at the point A is lower than a voltage resistance value of at least one resonant component of the inverter.

Specifically, the resonance frequency of the inverter is controlled to be lower than an operating frequency of the inverter when it is detected whether the atomizer 10 is connected to the power supply assembly 20. The operating frequency of the inverter refers to that, when the atomizer 10 is connected to the power supply assembly 20, the inverter can enable, at this frequency, the susceptor 11 to heat a liquid substrate, to generate an aerosol for inhalation. Generally, the operating frequency of the inverter is between 800 KHz and 2 Mhz.

Vin is also positively correlated to the resonance voltage at the point A. That is, when Vin is relatively large, the resonance voltage at the point A is also relatively large. Therefore, when it is detected whether the atomizer 10 is connected to the power supply assembly 20, the pulse voltage provided for the inverter is controlled to be between a voltage of the battery cell and the operating voltage of the inverter; and preferably, the pulse voltage provided for the inverter is controlled to be the voltage of the battery cell. For the operating voltage of the inverter, refer to a definition of the operating frequency of the inverter. The operating voltage is usually a voltage, such as 8.5 V, obtained after the voltage of the battery cell is boosted.

It may be understood that the resonance frequency and a supply voltage of the inverter may be controlled, so that the resonance voltage at the point A is lower than a voltage resistance value of at least one resonant component of the inverter. For example, a supply voltage of the inverter may be first controlled to be the voltage of the battery cell, and then the resonance frequency of the inverter is controlled; and the two may also be simultaneously controlled, and there is no particular sequence.

As a specific example, if a quality factor of the resonant circuit 222 is Q=34.8 when the electronic atomization device 100 operates at 1.55 Mhz (the supply voltage of the inverter is the voltage of the battery cell, for example, 4 V), in this case, the resonance voltage at the point A is 34.8*4 V=139 V, which is higher than the voltage resistance value, for example, 100 V, of the resonant component. Therefore, when it is detected whether the atomizer 10 is connected to the power supply assembly 20, the resonance frequency of the inverter is reduced, for example, reduced to 1 Mhz or less, thereby avoiding a damage risk of the first capacitor C1, the second capacitor C2, the switch tube Q1, and the switch tube Q2.

In an example, the controller is configured to control the battery cell 23 to provide a first pulse voltage for the inverter, so that the inverter operates at a first resonance frequency, and the susceptor 11 generates heat; and
control the battery cell 23 to periodically provide a second pulse voltage for the inverter at an interval, so that the inverter operates at a second resonance frequency lower than the first resonance frequency, to detect whether the atomizer 10 is connected to the power supply assembly 20.

A voltage value of the second pulse voltage is less than or equal to a voltage value of the first pulse voltage.

When the atomizer 10 is connected to the power supply assembly 20, the Q value is usually relatively small. Therefore, a relatively large pulse voltage may be provided for the inverter, and the inverter is enabled to operate at a relatively high resonance frequency. On the one hand, the susceptor 11 can be enabled to heat up to generate an aerosol as soon as possible, and on the other hand, it is not easy to damage the resonant component (the amplitude of the resonance voltage at the point A is relatively small). As described above, the resonance frequency at which the inverter operates is between 800 KHz and 2 Mhz, and the pulse voltage provided for the inverter is a voltage, for example, 8.5 V, obtained after the voltage of the battery cell is boosted.

When the controller detects whether the atomizer 10 is connected to the power supply assembly 20, if the atomizer 10 is not connected to the power supply assembly 20, the Q value is relatively large. In this case, if a relatively large pulse voltage is still provided for the inverter, and the inverter is enabled to operate at a relatively high resonance frequency, the amplitude of the resonance voltage at the point A may be relatively large, and it is very easy to damage the resonant component, for example, the first capacitor C1, the second capacitor C2, the switch tube Q1, or the switch tube Q2. Therefore, a relatively small pulse voltage needs to be provided for the inverter, so that the inverter operates at a relatively low resonance frequency.

In an example, the controller is configured to be woken up at regular intervals to detect whether the atomizer 10 is connected to the power supply assembly 20.

Specifically, electronic atomization device 100 may further include a timer. The timer may be integrated into the controller or disposed separately. When receiving a timing signal generated by the timer, the controller controls the battery cell 23 to provide a pulse voltage for the inverter to detect whether the atomizer 10 is connected to the power supply assembly 20.

When detecting that the atomizer 10 is not connected to the power supply assembly 20, or the atomizer 10 is removed from the power supply assembly, the controller controls the inverter to stop operating.

Within a predetermined time period after the inverter stops operating, the controller may control the battery cell to periodically provide a second pulse voltage for the inverter, so that the inverter operates at a second resonance frequency, to detect whether the atomizer is connected to the power supply assembly.

In an example, the controller is further configured to: obtain at least one electric parameter of the inverter, and determine, based on the electric parameter, whether the atomizer is connected to the power supply assembly.

The electric parameter includes, but is not limited to, a resonance voltage, a resonance current, a Q value, a resonance frequency, a parameter derived from the foregoing parameter, and the like.

In another example, the electronic atomization device 100 further includes an indication component. When determining, based on the electric parameter, that the atomizer is not connected to the power supply assembly, that is, when the inverter is in an unloaded state, the controller controls the indication component to indicate transformation of the inverter from a load state to the unloaded state. Certainly, the indication component can also indicate transformation of the inverter from the unloaded state to the load state. As an optional example, the indication component may include an LED, a display screen, a vibrator, a buzzer, or the like. As an optional example, the indication component may provide an indication when the inverter stops operating.

In a specific example, the electronic atomization device 100 may further include a sampling circuit, configured to detect a resonance voltage of the point A to obtain a sampling voltage; and the controller is further configured to determine, based on the sampling voltage, whether the atomizer 10 is connected to the power supply assembly 20.

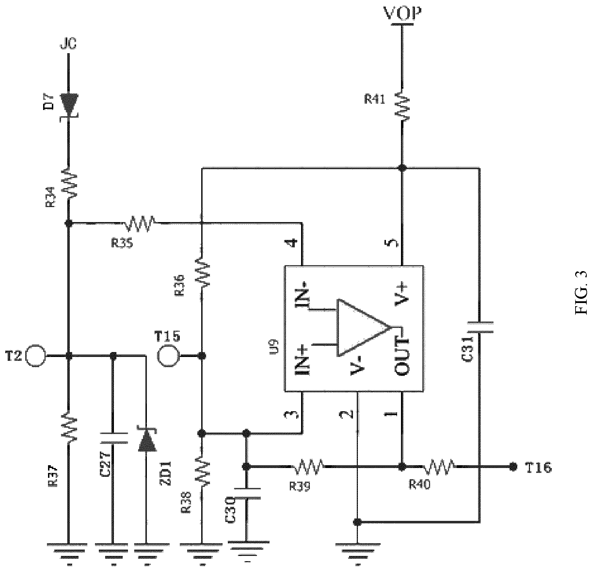

Specifically, as shown in FIG. 3, the sampling circuit includes a resistance R34 and a resistance R37 connected in series, to divide the resonance voltage at the point A; and the resistance R34 is coupled to a high-frequency resonance voltage through a diode D7, and C27 is an integrating capacitor that enables a voltage at a point T2 to be in a stable state. In this way, the controller may detect, based on voltage dividing of the sampling circuit, whether the atomizer 10 is connected to the power supply assembly 20. Generally, when the atomizer 10 is not connected to the power supply assembly 20, the Q value is relatively large, the amplitude of the resonance voltage of the point A is relatively large, and the sampling voltage is also relatively large; and when the atomizer 10 is connected to the power supply assembly 20, the Q value is relatively small, the amplitude of the resonance voltage of the point A is relatively small, and the sampling voltage is also relatively small.

It can be seen from the foregoing specific example that, when the atomizer 10 is not connected to the power supply assembly 20, the resonance voltage at the point A is higher than the voltage resistance value of the resonant component; and if the supply voltage of the inverter is a voltage value obtained after the voltage of the battery cell is boosted, the resonance voltage at the point A is far higher than the voltage resistance value of the resonant component.

In another specific example, the electronic atomization device 100 may further include a comparator circuit, configured to compare a sampling voltage of the sampling circuit with a preset voltage threshold, to output a comparison signal; and the controller is further configured to control, based on the comparison signal, the inverter to stop operating. That is, resonant output is disabled to protect the resonant component.

As shown in FIG. 3, in a specific example, the comparator circuit includes a comparator U9, a resistance R36, a resistance R38, and a capacitor C30, which form a forward end (int+) input of the comparator U9; a reverse end (in-) of the comparator U9 is electrically connected to the sampling circuit through a resistance R35; ZD1 is a Zener diode. When a voltage of T2 steadily rises above a preset threshold voltage, for example, 2.7 V, ZD1 reversely breaks down (breakdown), so that the voltage of T2 does not exceed 2.7 V, and the comparator U9 is protected from being damaged because an input voltage is higher than a rated voltage of a chip; and a resistance R41 and a capacitor C31 act as an RC integrating decoupler, so that an operating voltage of the comparator U9 is not affected by an external input end voltage VOP, and the operating voltage of the comparator U9 is kept stable.

An operating principle thereof is approximately as follows: when an input voltage at the reverse end (in-) of the comparator U9 is lower than a 1/2 VOP voltage, a high level is output at an output end (OUT) of the comparator U9; and when the input voltage at the reverse end (in-) is higher than the 1/2 VOP voltage, an output level at the output end (OUT) of the comparator U9 changes from a high level to a low level, and is output to the controller, for example, an external interrupt I/O port of the MCU, through a resistance R40. After receiving the interrupt signal, the controller immediately disables resonant output, to protect the resonant component from being damaged. In addition, disabling the resonant output in time may reduce power consumption for a system, and improve endurance of the battery cell.

In another example, different from the example in FIG. 3, it is also feasible to directly use a built-in comparator of the controller without setting the comparator. Specifically, the resonance voltage of the point A is divided through the resistance R34 and the resistance R37. The resistance R35 may introduce a sampling voltage obtained after the division to the controller, for example, the I/O port of the MCU. The controller compares the sampling voltage with the preset threshold voltage (for example, 1.8 V) to generate a comparison signal, and controls, based on the comparison signal, the inverter to stop operating. The comparison signal enables the controller to generate an interruption, and immediately disable the resonant output, to protect the resonant component from being damaged.

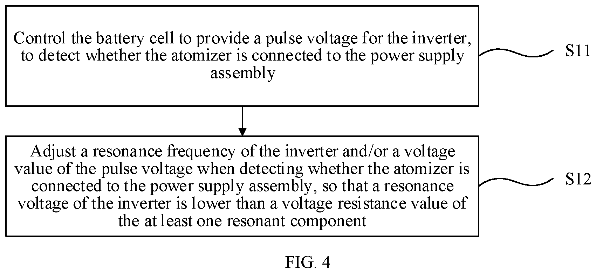

As shown in FIG. 4, this application further provides a control method for an electronic atomization device, and for a structure of the electronic atomization device, refer to the foregoing content. Details are not described herein again.

The method includes the following steps.

S11: Control the battery cell to provide a pulse voltage for the inverter, to detect whether the atomizer is connected to the power supply assembly.

S12: Adjust a resonance frequency of the inverter and/or a voltage value of the pulse voltage when detecting whether the atomizer is connected to the power supply assembly, so that a resonance voltage of the inverter is lower than a voltage resistance value of the at least one resonant component.

In an example, the method further includes:
controlling the battery cell to provide a first pulse voltage for the inverter, so that the inverter operates at a first resonance frequency, and the susceptor generates heat; and
controlling the battery cell to periodically provide a second pulse voltage for the inverter at an interval, so that the inverter operates at a second resonance frequency lower than the first resonance frequency, to detect whether the atomizer is connected to the power supply assembly.

In an example, the method further includes:
a voltage value of the second pulse voltage being less than a voltage value of the first pulse voltage.

In an example, the method further includes:
obtaining at least one electric parameter of the inverter, and determining, based on the electric parameter, whether the atomizer is connected to the power supply assembly.

In an example, the method further includes:
comparing the electric parameter of the inverter with a first preset electric parameter threshold, and controlling, based on a comparison result, the inverter to stop operating.

In an example, the electronic atomization device further includes a comparator circuit; the comparator circuit is configured to compare at least one electric parameter obtained from the inverter with a second preset electric parameter threshold, to output a comparison signal; and
the method further includes:
controlling, based on the comparison signal, the inverter to stop operating.

In an example, the method further includes:
the at least one electric parameter of the inverter including a resonance voltage.

In an example, the method further includes:
controlling the inverter to stop operating when detecting that the atomizer is removed from the power supply assembly.

In an example, the method further includes:
within a predetermined time period after the inverter stops operating, controlling the battery cell to periodically provide a second pulse voltage for the inverter, so that the inverter operates at a second resonance frequency, to detect whether the atomizer is connected to the power supply assembly.

In an example, the method further includes:
being woken up at regular intervals to detect whether the atomizer is connected to the power supply assembly.

It should be noted that, in the foregoing example, only an LCC series resonant circuit is used for description; and in other examples, an LC series resonant circuit (including but not limited to a half-bridge series resonance and a full-bridge series resonance), an LC parallel resonant circuit, and the like may be used for description.

It should be noted that, the specification of this application and the accompanying drawings thereof illustrate preferred embodiments of this application. However, this application may be implemented in various different forms, and is not limited to the embodiments described in this specification. These embodiments are not intended to be an additional limitation on the content of this application, and are provided for the purpose of providing a more thorough and comprehensive understanding of the content disclosed in this application. Moreover, the foregoing technical features are further combined to form various embodiments not listed above, and all such embodiments shall be construed as falling within the scope of this application. Further, a person of ordinary skill in the art may make improvements or modifications according to the foregoing description, and all the improvements and modifications shall fall within the protection scope of the appended claims of this application.

## Claims

1. An electronic atomization device, comprising a power supply assembly, and an atomizer removable connected to the power supply assembly;
the atomizer comprising a susceptor, the susceptor being configured to be penetrated by a varying magnetic field to generate heat, to heat a liquid substrate to generate an aerosol;
the power supply assembly comprising:
a battery cell, configured to supply power;
an inverter, comprising at least one resonant component, the inverter being configured to generate a varying magnetic field; and
a controller, configured to control the battery cell to provide a pulse voltage for the inverter, to detect whether the atomizer is connected to the power supply assembly; and further configured to adjust a resonance frequency of the inverter and/or a voltage value of the pulse voltage when detecting whether the atomizer is connected to the power supply assembly, so that a resonance voltage of the inverter is lower than a voltage resistance value of the at least one resonant component.

2. The electronic atomization device according to claim 1, wherein the inverter comprises a switch circuit and a resonant circuit; the switch circuit comprises a switch tube, and the resonant circuit comprises an inductor and a capacitor; and
the switch tube is configured to be alternately turned on and turned off under driving of a pulse signal, so that the inductor in the resonant circuit flows through alternating current and generate a varying magnetic field.

3. The electronic atomization device according to claim 2, wherein the resonant component comprises the switch tube and/or the capacitor.

4. The electronic atomization device according to claim 2, wherein the inductor and the capacitor are connected in series.

5. The electronic atomization device according to claim 4, wherein the switch tube comprises a first switch tube and a second switch tube, and the capacitor comprises a first capacitor and a second capacitor;
the first switch tube and the second switch tube are connected in series to form a first branch, and the first capacitor and the second capacitor are connected in series to form a second branch; and
one end of the inductor is electrically connected between the first switch tube and the second switch tube, and the other end is electrically connected between the first capacitor and the second capacitor.

6. The electronic atomization device according to claim 1, wherein the controller is further configured to:
control the battery cell to provide a first pulse voltage for the inverter, so that the inverter operates at a first resonance frequency, and the susceptor generates heat; and
control the battery cell to periodically provide a second pulse voltage for the inverter at an interval, so that the inverter operates at a second resonance frequency lower than the first resonance frequency, to detect whether the atomizer is connected to the power supply assembly.

7. The electronic atomization device according to claim 6, wherein a voltage value of the second pulse voltage is less than a voltage value of the first pulse voltage.

8. The electronic atomization device according to claim 1, wherein the controller is further configured to: obtain at least one electric parameter of the inverter, and determine, based on the electric parameter, whether the atomizer is connected to the power supply assembly.

9. The electronic atomization device according to claim 8, wherein the controller is further configured to: compare the electric parameter of the inverter with a first preset electric parameter threshold, and control, based on a comparison result, the inverter to stop operating.

10. The electronic atomization device according to claim 1, wherein the electronic atomization device further comprises a comparator circuit;
the comparator circuit is configured to compare at least one electric parameter obtained from the inverter with a second preset electric parameter threshold, to output a comparison signal; and
the controller is further configured to control, based on the comparison signal, the inverter to stop operating.

11. The electronic atomization device according to any one of claims 8 to 10, wherein the at least one electric parameter of the inverter comprises a resonance voltage.

12. The electronic atomization device according to claim 1, wherein the controller is further configured to control the inverter to stop operating when detecting that the atomizer is removed from the power supply assembly.

13. The electronic atomization device according to claim 12, wherein the controller is further configured to control, within a predetermined time period after the inverter stops operating, the battery cell to periodically provide a second pulse voltage for the inverter, so that the inverter operates at a second resonance frequency, to detect whether the atomizer is connected to the power supply assembly.

14. The electronic atomization device according to claim 1, wherein the controller is further configured to be woken up at regular intervals to detect whether the atomizer is connected to the power supply assembly.

15. An electronic atomization device, comprising a power supply assembly, and an atomizer removable connected to the power supply assembly;
the atomizer comprising a susceptor, the susceptor being configured to be able to be penetrated by a varying magnetic field to generate heat, to heat a liquid substrate to generate an aerosol;
the power supply assembly comprising:
a battery cell, configured to supply power;
an inverter, configured to generate a varying magnetic field; and
a controller, configured to:
control the battery cell to provide a first pulse voltage for the inverter, so that the inverter operates at a first resonance frequency, and the susceptor generates heat; and
control the battery cell to periodically provide a second pulse voltage for the inverter at an interval, so that the inverter operates at a second resonance frequency lower than the first resonance frequency, to detect whether the atomizer is connected to the power supply assembly.

16. An electronic atomization device, wherein the electronic atomization device comprises a power supply assembly, and an atomizer removable connected to the power supply assembly;
the atomizer comprises a susceptor, the susceptor is configured to be penetrated by a varying magnetic field to generate heat, to heat a liquid substrate to generate an aerosol;
the power supply assembly comprises:
a battery cell, configured to supply power; and
an inverter, comprising at least one resonant component, and configured to generate a varying magnetic field; and
the method comprises:
controlling the battery cell to provide a pulse voltage for the inverter, to detect whether the atomizer is connected to the power supply assembly; and
adjusting a resonance frequency of the inverter and/or a voltage value of the pulse voltage when detecting whether the atomizer is connected to the power supply assembly, so that a resonance voltage of the inverter is lower than a voltage resistance value of the at least one resonant component.
